# EUROPEAN PATENT APPLICATION

(11) **EP 4 797 016 A1**
(43) Date of publication of application: **26.08.2026**
(21) Application number: 24894056.1
(22) Date of filing: 12.11.2024
(51) Int. Cl.: G05B 19/4063, B23B 25/00, B23B 25/06, B23Q 11/00, B23Q 15/08

(54) **CHIP BREAKABILITY PREDICTION DEVICE, CONTROL DEVICE, AND CHIP BREAKABILITY PREDICTION METHOD**

(30) Priority: 22.11.2023 JP 2023198389
(71) Applicant: KABUSHIKI KAISHA KOBE SEIKO SHO (KOBE STEEL, LTD.), Hyogo 651-8585 (JP)
(72) Inventor: YAMAMOTO, Yuya, Kobe-shi, Hyogo 651-2271 (JP); SHIMIZU, Hiroya, Takasago-shi, Hyogo 676-8670 (JP)
(74) Representative: TBK
(86) International application number: PCT/JP2024/040204
(87) International publication number: WO 2025/110065

(57) **Abstract**

A chip breakability prediction device includes a storage unit that stores information on a workpiece and a tool in cutting, a reception unit that receives information on a workpiece to be subjected to cutting and a tool to be used, the workpiece and the tool being selected from the workpiece and the tool indicated in the information stored in the storage unit, and receives information indicating a feed rate and a cutting amount in the cutting, an arithmetic unit that derives information for predicting whether a chip is broken using the information received by the reception unit, and a display unit that displays the information for predicting whether the chip is broken, the information being derived by the arithmetic unit.

## Description

### Technical Field

The present invention relates to a chip breakability prediction device, a control device, and a chip breakability prediction method.

### Background Art

In general, whether the chip can be broken can be determined by referring to what is written as an appropriate range of the breaker in a catalog of a tool manufacturer. However, since the appropriate range greatly changes depending on the material, the appropriate range is often not appropriate. Therefore, it is common to narrow down appropriate conditions by performing many experiments while changing conditions and tools.

In addition, at a research level, there is an approach of predicting whether a chip can be broken using FEM analysis software as in Non-Patent Literature 1 below. In Non-Patent Literature 1, it is stated that it is recognized that the analysis of the chip breaking process using the thermo-elastoplastic finite element method is consistent with the experimental result. However, since FEM analysis requires a long analysis time per condition, it is not suitable for predicting whether a chip can be broken in many tools and a wide range of conditions.

In addition, efforts have also been made to theoretically grasp chip break (see, for example, Non-Patent Literature 2 below). As disclosed in Non-Patent Literature 2, the conditions under which a chip fractures can be obtained by using chip fracture strain determined by the material of the chip and tensile strain generated in the chip obtained from the chip thickness and the initial curl radius of the chip.

Non-Patent Literature 1 shows theoretical consideration using a thermo-elastoplastic finite element method, and Non-Patent Literature 2 shows that the chip break is theoretically captured. However, these Non-Patent Literatures merely show general theoretical considerations. Therefore, this theoretical consideration cannot always be used as it is when setting a specific cutting condition for a workpiece at a site where cutting is performed.

### Citation List

### Non-Patent Literature

Non-Patent Literature 1: Thermo-Elastoplastic Finite Element Method Simulation of Chipping Fracture Process by Chip Breaker, Shinozuka et al., Journal of the Japan Society for Precision Engineering VOL. 62, NO8, p1161-1166, 1996
Non-Patent Literature 2: Research on chip breaker, Kazuo Nakayama, Transactions of the Japan Society of Mechanical Engineers (Part 3), Vol. 27, No. 178, p833-843, 1961.6

### Summary of Invention

An object of the present invention is to facilitate determination of cutting conditions when cutting is performed.

A chip breakability prediction device according to an aspect of the present invention includes a storage unit that stores information on a workpiece and a tool in cutting, a reception unit configured to receive information on a workpiece to be subjected to cutting and a tool to be used, the workpiece being selected from the workpiece and the tool indicated in the information stored in the storage unit, and receives information indicating a feed rate and a cutting amount in the cutting, an arithmetic unit configured to derive information for predicting whether a chip is broken using the information received by the reception unit, and a display unit configured to display the information for predicting whether the chip is broken, the information being derived by the arithmetic unit.

A control device according to one aspect of the present invention is a control device provided in a prediction system for predicting breakability of a chip in cutting and to be communicably connected to an input/output device, the control device including a storage unit that stores information on a workpiece and a tool in cutting, a reception unit configured to receive, from the input/output device, information on a workpiece to be subjected to cutting and a tool to be used, which are selected by the input/output device from among the workpiece and the tool indicated in the information stored in the storage unit, and receive, from the input/output device, information indicating a feed rate and a cutting amount in the cutting, an arithmetic unit configured to derive information for predicting whether a chip is broken using the information received by the reception unit, and a communication unit configured to communicate with the input/output device such that the information for predicting whether the chip is broken derived by the arithmetic unit is displayed on a display unit of the input/output device.

A chip breakability prediction method according to one aspect of the present invention includes receiving, by a reception unit, information on a workpiece to be subjected to cutting and a tool to be used, the workpiece and the tool being selected from the workpiece and the tool in the cutting indicated in information stored in a storage unit, and receiving, by the reception unit, information indicating a feed rate and a cutting amount in the cutting, deriving, by an arithmetic unit, information for predicting whether a chip is broken, using the information received by the reception unit, and displaying the information derived by the arithmetic unit on a display unit.

A chip breakability prediction method according to one aspect of the present invention includes receiving, from an input/output device, information on a workpiece to be subjected to cutting and a tool to be used, the workpiece and the tool being selected from the workpiece and the tool in the cutting indicated in the information stored in a storage unit, and receiving, from the input/output device, information indicating a feed rate and a cutting amount in the cutting, deriving, by an arithmetic unit, information for predicting whether a chip is broken in a case of a workpiece, a tool, a feed rate, and a cutting amount indicated by the information received, and communicating, by a communication unit, with the input/output device such that the information derived by the arithmetic unit is displayed on a display unit of the input/output device.

### Brief Description of Drawings

FIG. 1 is a diagram schematically illustrating a chip breakability prediction device according to a first embodiment.
FIG. 2 is a diagram illustrating an example of a display screen provided on a display unit of an input/output unit included in the chip breakability prediction device.
FIG. 3 is a diagram for explaining a chamfer width b.
FIG. 4 is a diagram for explaining a chip thickness h.
FIG. 5 is a diagram for explaining a chip outflow direction θd.
FIG. 6 is a diagram for explaining a cutting thickness t in a case where a cutting amount d is larger than a nose radius R.
FIG. 7 is a diagram for explaining a cutting thickness t when a obtained by Expression (6) is negative.
FIG. 8 is a diagram for explaining a cutting thickness t in the case of using Expression (8).
FIG. 9 is a diagram for explaining a method of calculating a rake angle α and a breaker shape β (a chip initial curl radius r₀) in a chip outflow direction θd.
FIG. 10 is a diagram for explaining a method of deriving a rake surface and a breaker slope.
FIG. 11A is a diagram for explaining a parallel chip.
FIG. 11B is a view for explaining a clamp type chip.
FIG. 12 is a diagram for explaining a method of determining a chip fracture strain ε_{c}.
FIG. 13 is a diagram illustrating a case where a chip thickness h is larger than a distance L from a blade tip to a breaker vertex.
FIG. 14 is a diagram for explaining a method of predicting the chip breakability.
FIG. 15 is a diagram illustrating an example of a prediction result obtained by the chip breakability prediction device.
FIG. 16A is a diagram illustrating an example of a prediction result in a case where a tensile strain is substituted by a corrected tensile strain.
FIG. 16B is a diagram illustrating an example of a prediction result in a case where the tensile strain is substituted by the corrected tensile strain.
FIG. 16C is a diagram illustrating an example of a prediction result in a case where the tensile strain is substituted by the corrected tensile strain.
FIG. 17 is a diagram illustrating an example of a prediction result in a case where the tensile strain is substituted by the corrected tensile strain.
FIG. 18 is a diagram illustrating an example of a prediction result in a case where the chip thickness h is larger than the distance L from the blade tip to the vertex of the breaker.
FIG. 19 is a diagram illustrating an example of a prediction result in a case where the chip thickness h is larger than the distance L from the blade tip to the vertex of the breaker.
FIG. 20 is a diagram schematically illustrating a prediction system including a control device according to a second embodiment.

### Description of Embodiments

In the following, embodiments of the present invention will be described in detail with reference to the drawings.

### (First embodiment)

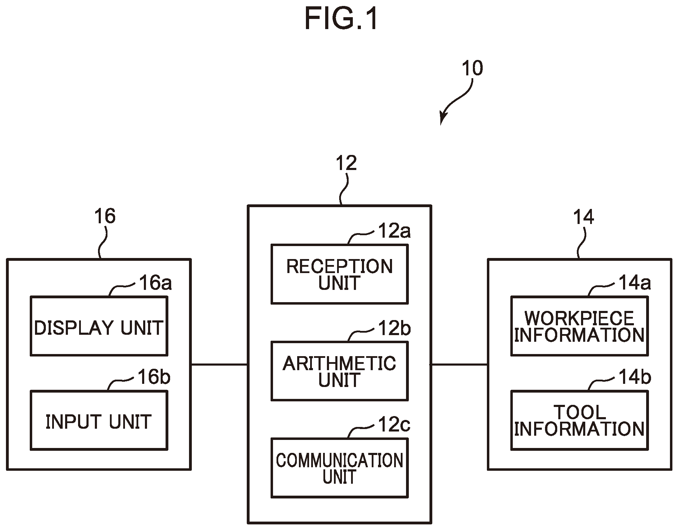

As illustrated in FIG. 1, a chip breakability prediction device 10 according to the first embodiment includes a control unit 12 for performing arithmetic processing, a storage unit 14 for storing a processing program, data, and the like, and an input/output unit 16 used for inputting/outputting information. The control unit 12 includes a central processing unit (CPU), and the CPU is configured to execute various calculations. When performing the calculation, the control unit 12 appropriately uses the information input from the input/output unit 16 and the information stored in the storage unit 14.

The storage unit 14 stores information on a workpiece during cutting (workpiece information 14a) and information on a tool (tool information 14b). The workpiece information 14a includes information related to the name of the workpiece, and information such as a value of fracture strain and a shear angle. The tool information 14b includes information such as information regarding the name of the holder, information regarding the name of the chip, and data indicating the shape of the cross section of the chip in a predetermined direction.

Furthermore, the storage unit 14 may temporarily store information input through the input/output unit 16 and data and information used in calculation by an arithmetic unit 12b described later.

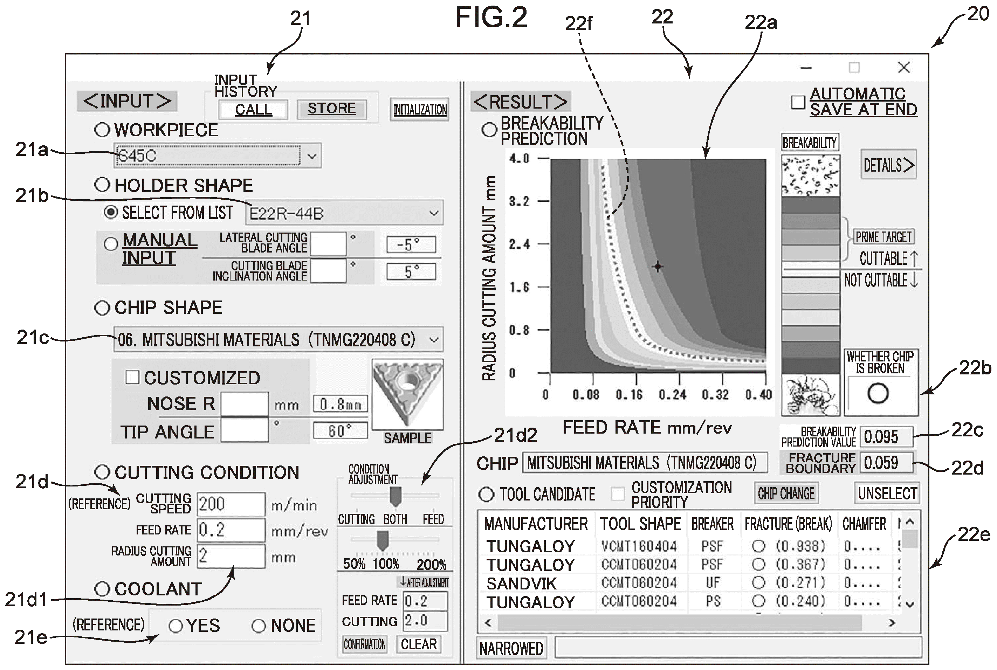

The input/output unit 16 includes a display unit 16a configured to display cutting conditions and calculation results. As illustrated in FIG. 2, a display screen 20 of the display unit 16a includes an input region 21 and a result output region 22. Information according to an operation on an input unit 16b such as a keyboard is input to the input region 21. Note that the input unit 16b may be configured integrally with the display unit 16a.

The input region 21 includes a workpiece field 21a, a holder shape field 21b, a chip shape field 21c, a cutting condition field 21d, and a coolant condition field 21e. In the workpiece field 21a, various workpieces are displayed in a pull-down format. From this list, a workpiece to be cut can be selected. The workpieces listed in the workpiece field 21a are acquired from the information on the workpiece stored in the storage unit 14. Information indicating the workpiece selected through the input/output unit 16 is input to a reception unit 12a described later.

In the holder shape field 21b, various holders are displayed in a pull-down format. A holder to be used can be selected from the list. The lateral cutting blade angle and the cutting blade inclination angle can also be manually input. Information indicating the lateral cutting blade angle and the cutting blade inclination angle is input to the reception unit 12a described later.

In the chip shape field 21c, various chips are displayed in a pull-down format. A chip to be used can be selected from this list. Chips listed in the chip shape field 21c are acquired from the information indicating the tool stored in the storage unit 14. It is also possible to designate the tip radius and the tip angle of the chip. The information indicating the chip selected in this field 21c and the information indicating the tip radius and the tip angle of the chip designated in this field 21c are input to the reception unit 12a described later.

The cutting condition field 21d includes an input box 21d1 to which a cutting speed, a feed rate, and a cutting amount can be input, and an adjustment field 21d2 arranged adjacent thereto. The feed rate is a feed amount per rotation, and the cutting amount is a cutting amount in the radial direction.

The numerical values of the cutting speed, the feed rate, and the cutting amount are input to the input box 21d1. However, regarding the feed rate and the cutting amount, it is possible to finely adjust the numerical values input to the input box 21d1 by moving the slider displayed in the adjustment field 21d2. The cutting speed is not used for calculation of tensile strain generated in chips described later. Therefore, the input box 21d1 of the cutting speed can be omitted. The information regarding the feed rate and the cutting amount input in this field 21d is input to the reception unit 12a described later.

In the coolant condition field 21e, whether to use a coolant is input. Note that the input information may not be used for prediction of chip break. Therefore, the coolant condition field 21e can be omitted.

The result output region 22 includes a contour map field 22a, a breakability field 22b, a breakability prediction value field 22c, a fracture boundary field 22d, and a tool candidate field 22e. The contour map displayed as an image in the contour map field 22a is a contour map shown in a coordinate system with cutting conditions as coordinate axes. In the contour map, the distribution of the tensile strain generated in the chip is represented by contour lines, and a fracture boundary 22f of the chip is represented.

In the contour map illustrated in FIG. 2, the horizontal axis represents the feed rate and the vertical axis represents the cutting amount. The horizontal axis may be the cutting amount, and the vertical axis may be the feeding amount.

In the contour map, the ranges of the feed rate and the cutting amount to be displayed are set such that the feed rate and the cutting amount indicated by the information input in the input region 21 and received by the reception unit 12a to be described later are positioned at the center of the contour map. In addition, the ranges of the feed rate and the cutting amount to be displayed are determined to include at least a range predicted to be actually adjustable, and to display a range that is not too large for the range. Therefore, the contour map is a contour map in which the adjustment amount can be easily determined when the feed rate or the cutting amount is adjusted. These display controls are performed by a display control function included in the control unit 12, and the control unit 12 provides control information obtained by the display control function to the input/output unit 16 through a communication unit 12c.

In the contour map, a mark (in FIG. 2, a "+" mark) indicating the feed rate and the cutting amount input in the input region 21 and received by the reception unit 12a to be described later is displayed, and the fracture boundary 22f is displayed by a broken line. The fracture boundary 22f indicates a condition under which the tensile strain generated in the chip when the feed rate and the cutting amount are changed becomes the fracture strain ε_{c}. In addition, the contour lines of the ratio of the tensile strain to the fracture strain are illustrated in the contour map. The distribution of the tensile strain is displayed such that the magnitude of the ratio is divided into predetermined values by one or more methods selected from color, shade of the hue, and luminance. Note that a difference value may be used instead of the ratio.

In the breakability field 22b, a mark indicating whether the chip is predicted to be broken, whether the chip is predicted not to be broken, or an intermediate value thereof is displayed based on information derived by the arithmetic unit 12b to be described later. As a result, it is possible to visually grasp whether the chip is broken.

The value of the tensile strain ε in the case of the feed rate and the cutting amount input in the input region 21 and received by the reception unit 12a to be described later is displayed as a numerical value in the breakability prediction value field 22c, and the value of the fracture strain ε_{c} is displayed as a numerical value in the fracture boundary field 22d.

In the tool candidate field 22e, a list of tools in which a chip is predicted to be broken is displayed based on information derived by the later-described arithmetic unit 12b. That is, for the workpiece selected in the input region 21, the arithmetic unit 12b calculates whether the chip is broken for all the tools included in the information stored in the storage unit 14. Therefore, according to this calculation, all the tools are displayed in the tool candidate field 22e such that the tool predicted to have high chip breakability is arranged in a higher order. That is, the chip breakability is listed for each tool. The display control is also performed by the display control function included in the control unit 12, and the control unit 12 provides control information obtained by the display control function to the input/output unit 16 through the communication unit 12c.

As illustrated in FIG. 1, the functions executed by the control unit 12 include a reception unit 12a, an arithmetic unit 12b, and a communication unit 12c. The reception unit 12a receives information on factors that affect whether a chip is broken, such as cutting conditions. Specifically, information on the workpiece and the tool selected in the input region 21 of the input/output unit 16 is input to the reception unit 12a from the input/output unit 16. Information indicating the feed rate and the cutting amount input in the input region 21 of the input/output unit 16 is input from the input/output unit 16 to the reception unit 12a. That is, the reception unit 12a receives information on a workpiece to be subjected to cutting and a tool to be used, which are selected from the workpiece included in the workpiece information 14a and the tool indicated in the tool information 14b stored in the storage unit 14, and receives information indicating the feed rate and the cutting amount input in the input/output unit 16.

The arithmetic unit 12b derives information for predicting whether a chip is broken using the information received by the reception unit 12a.

The communication unit 12c communicates with the input/output unit 16 such that the information for predicting whether the chip is broken derived by the arithmetic unit 12b is displayed in the result output region 22 on the display screen 20 of the display unit 16a included in the input/output unit 16. The information for predicting whether a chip is broken includes the information displayed in the contour map field 22a, the mark displayed in the breakability field 22b, the value of the tensile strain displayed in the breakability prediction value field 22c, and the value of the fracture strain displayed in the fracture boundary field 22d.

Here, derivation of information for predicting whether a chip is broken performed by the arithmetic unit 12b and prediction determination of whether a chip is broken will be described in detail.

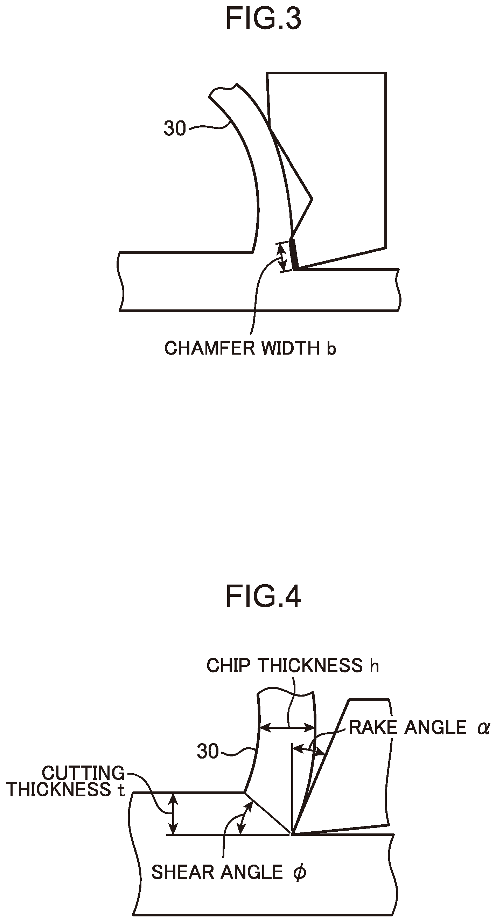

Whether the chip 30 (FIG. 3) can be broken can be predicted by comparing the tensile strain ε generated in the chip 30 at the time of cutting with the fracture strain ε_{c} of the material used for cutting, and determining how much the tensile strain ε is larger than the fracture strain ε_{c}.

The tensile strain ε generated in the chip 30 is obtained by the following Expression (1). Here, h is the chip thickness and r₀ is the chip initial curl radius. That is, the tensile strain ε is calculated based on the initial curl radius r₀ and the chip thickness h of the chip 30.
[Math. 1] $ε = \frac{h}{2 {r}_{0}}$

The tensile strain ε may be replaced by a corrected tensile strain ε' corrected by the following Expressions (2) and (3). Here, t is a cutting thickness, and b is a chamfer width or a blade tip rounding radius. That is, the tensile strain ε may be corrected to the corrected tensile strain ε' by a relational expression indicating the ratio of the cutting thickness t to the chamfer width or the blade tip rounding radius b. However, since the upper limit of A is 1, when the cutting thickness t is larger than the chamfer width or the blade tip rounding radius b, A = 1. $\begin{matrix}ε ′ = ε \times {A}^{2} Expression \left(2\right) \\ A = \frac{t}{b} Expression \left(3\right)\end{matrix}$

Although the square of A is used in Expression (2), the first power of A or the third power of A may be used instead of the square of A. As illustrated in FIG. 3, the chamfer width b is a width of a portion of a flat surface chamfered at the edge of the blade tip. The blade tip rounding radius b is a roundness radius at the edge of the blade tip.

Since the chip thickness h is determined by the geometric relationship as illustrated in FIG. 4, it is calculated by the following Expression (4). Here, t is a cutting thickness, Φ is a shear angle, and α is a rake angle.
[Math. 3] $h = t ⋅ \frac{sin \left(φ+90-α\right)}{sin φ}$

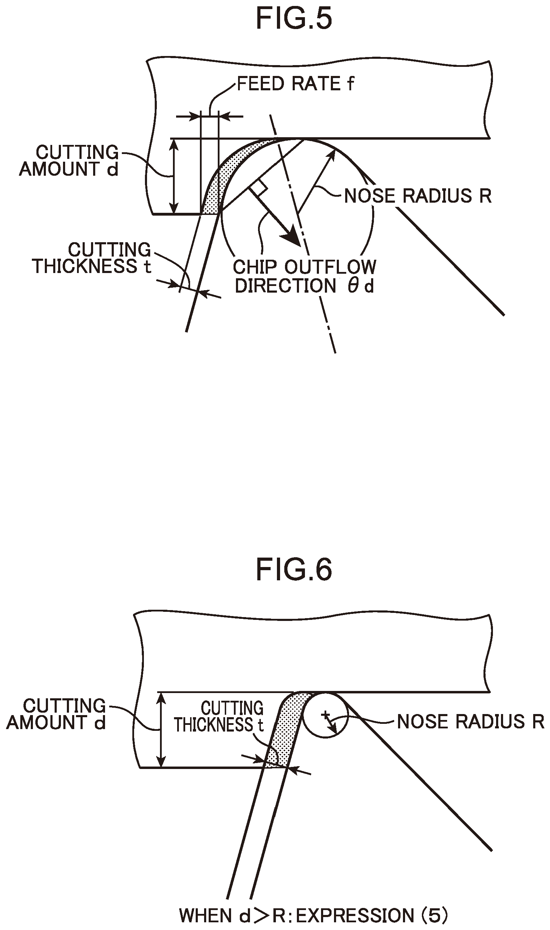

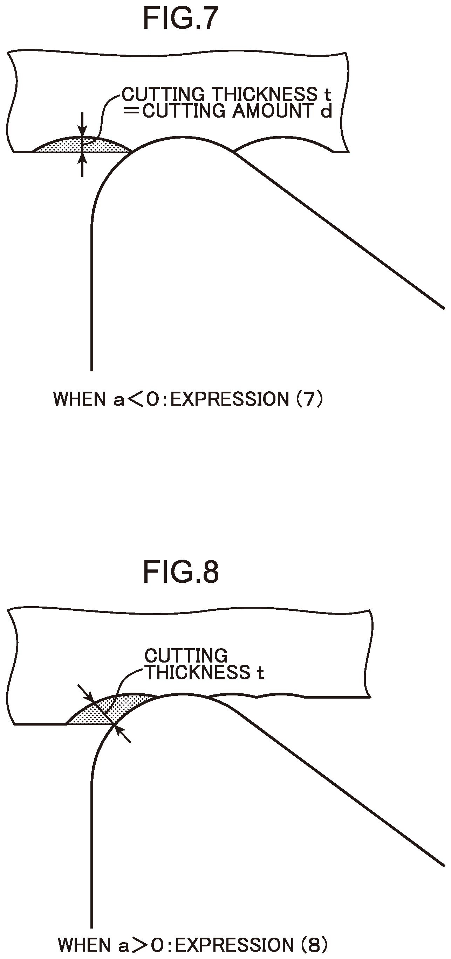

The cutting thickness t is geometrically obtained from cutting conditions and a tool posture. First, as illustrated in FIG. 6, when the cutting amount d is larger than the nose radius R (see FIG. 5), the cutting thickness t is obtained by Expression (5) using the feed rate f and the lateral cutting blade angle θ. When the value of a obtained by Expression (6) using the cutting amount d and the nose radius R is negative, the cutting thickness t has the same value as the cutting amount d, and thus Expression (7) is used. The case where the value of a obtained by Expression (6) is negative is the case shown in FIG. 7. In other cases, that is, when the cutting amount d is smaller than the nose radius R and the value of a obtained by Expression (6) is positive, the cutting thickness t is obtained by Expression (8). In the case of using Expression (8) in the case illustrated in FIG. 8, the lateral cutting blade angle θ is irrelevant, and the cutting thickness t is determined by the nose radius R, the cutting amount d, and the feed rate f. $\begin{matrix}t = f ⋅ cos θ Expression \left(5\right) \\ a = \sqrt{{R}^{2} - {\left(R-d\right)}^{2}} - f Expression \left(6\right) \\ t = d Expression \left(7\right) \\ t = R - \sqrt{{R}^{2} + {f}^{2} - 2 f \sqrt{{R}^{2} - {\left({R}^{2}-\left(R\right.-d\right)}^{2}}} Expression \left(8\right)\end{matrix}$

The rake angle α is acquired from the cross-sectional shape data of the chip in a predetermined direction stored in the storage unit 14. The rake angle α is not constant across all portions of the rake surface. For this reason, as the rake angle α, the rake angle α in a cross section along an outflow direction θd (see FIG. 5) of the chip 30 is adopted. Therefore, the rake angle α in the cross section along the direction θd is derived by the arithmetic unit 12b and temporarily stored in the storage unit 14.

The outflow direction θd of the chip 30 can be calculated using an approximate expression of Colwell assuming that the chip 30 flows out in a direction perpendicular to a straight line connecting both ends of the chip in contact with the workpiece (both ends in the circumferential direction of the nose). That is, when the cutting amount d, the feed rate f, and the nose radius R of the chip is determined, as illustrated in FIG. 5, the outflow direction θd of the chip 30 can be calculated from these geometric relationships.

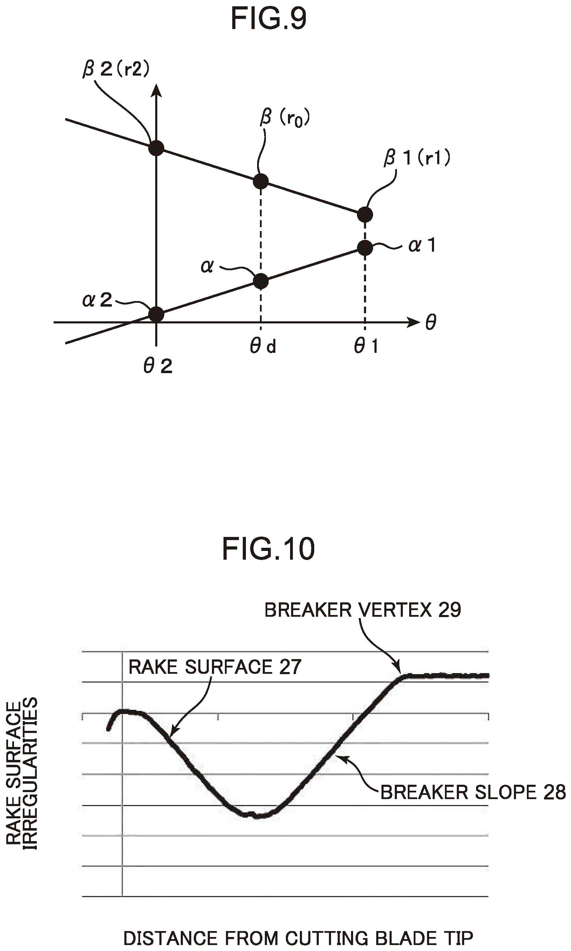

The storage unit 14 stores a rake angle α1 in a cross section in a direction θ1 perpendicular to the lateral cutting blade and a rake angle α2 in a cross section in a direction θ2 along a bisector of the tip angle of the chip. Therefore, the arithmetic unit 12b uses these rake angles α1 and α2 to obtain the rake angle α in the outflow direction θd according to the cutting condition by interpolation or extrapolation (see FIG. 9). In FIG. 9, θ2 on the horizontal axis corresponds to a direction along a bisector of the tip angle of the chip, and θ1 corresponds to a direction perpendicular to the lateral cutting blade.

The breaker shape is similarly derived. That is, the storage unit 14 stores data indicating a breaker shape in a predetermined direction. The predetermined direction is a direction θ1 perpendicular to the lateral cutting blade and a direction θ2 along a bisector of the tip angle of the chip. Then, the arithmetic unit 12b obtains the breaker shape β (or the chip initial curl radius r₀) in the chip outflow direction θd according to the cutting condition by interpolation or extrapolation from the data of the breaker shapes β1 and β2 (or the chip initial curl radius r₀) in the two directions θ1 and θ2 stored in the storage unit 14.

As illustrated in FIG. 10, the rake angles α1 and α2 are obtained by the gradient (or the gradient of the flat portion) and the distance (that is, the value of the intercept when the blade tip position is set as the origin position) from the blade tip position in a case where a rake surface 27 is linearly approximated in the cross section in the corresponding direction on the rake surface 27 of the chip. In addition, the breaker shapes β1 and β2 are obtained by gradients (or gradients of flat portions) in a case where a breaker slope 28 is linearly approximated in a cross section in a corresponding direction in the breaker slope 28 of the chip.

A shear angle Φ is obtained by performing a cutting test, and is stored in the storage unit 14. An example of the cutting speed, the cutting thickness t, and the rake angle α used in this cutting test is shown in Table 1. The storage unit 14 also stores information indicating the shear angle Φ including data of the shear angle Φ obtained from the cutting test performed under other conditions.

**[Table 1]**

| | |
|---|---|
| CUTTING SPEED (m/min) | 200 |
| CUTTING THICKNESS (mm) | 0.08, 0.12, 0.2, 0.3 |
| RAKE ANGLE (° ) | 0.5 |

In the cutting test, the thickness of the obtained chip 30 is actually measured. By substituting the measured chip thickness into the chip thickness h in Expression (4), the shear angle Φ is obtained. An example of the chip thickness obtained in the cutting test of S45C, which is a workpiece, and the calculated shear angle is shown in Table 2.

**[Table 2]**

| CUTTING SPEED m/min | FEED RATE mm/rev | CHIP THICKNESS mm | | | | | | S-IEAR ANGLE ° |
|---|---|---|---|---|---|---|---|---|
| | | 1 | 2 | 3 | 4 | 5 | AVERAGE | |
| | 0.08 | 0.191 | 0.184 | 0.194 | 0.196 | 0.193 | 0.192 | 22.7 |
| 200 | 0.12 | 0.265 | 0.266 | 0.271 | 0.271 | 0.274 | 0.269 | 24.1 |
| | 0.2 | 0.419 | 0.418 | 0.447 | 0.442 | 0.437 | 0.433 | 24.9 |
| | 0.3 | 0.572 | 0.643 | 0.651 | 0.617 | 0.683 | 0.633 | 25.5 |
| | | | | | | | AVERAGE | 24.3 |

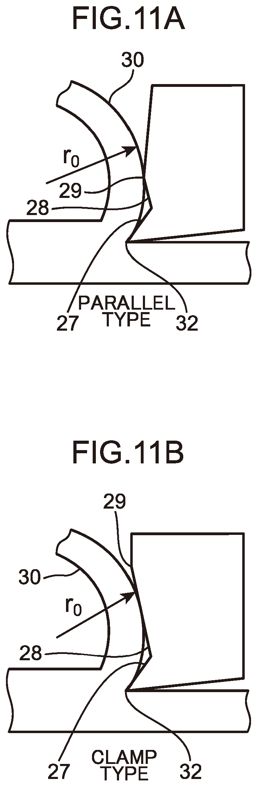

The initial curl radius r₀ of the chip 30 is calculated differently depending on whether the chip is applied to the parallel pattern or the clamp pattern illustrated in FIGS. 11A and 11B. In the parallel type shown in FIG. 11A, since the breaker slope 28 is small, the chip 30 contacts the portion of a blade tip 32 in the rake surface 27 and a vertex 29 of the breaker. Therefore, the initial curl radius r₀ is geometrically calculated as the radius of an arc in contact with the blade tip 32 and the vertex 29 of the breaker. On the other hand, in the clamp type illustrated in FIG. 11B, the chip 30 is in contact with the portion of the blade tip 32 on the rake surface 27 and the breaker slope 28. Therefore, the initial curl radius r₀ is geometrically calculated as a radius of an arc in contact with the blade tip 32 and the breaker slope 28. Note that the shape of the breaker derived by the arithmetic unit 12b is used to determine whether it is the parallel type or the clamp type.

As the initial curl radius, the initial curl radius r₀ in the chip outflow direction θd according to the cutting condition is used, similarly to the rake angle α. That is, the storage unit 14 stores an initial curl radius r1 (see FIG. 9) in a cross section in the direction θ1 perpendicular to the lateral cutting blade and an initial curl radius r2 (see FIG. 9) in a cross section in the direction θ2 along the bisector of the tip angle of the chip. Then, using these initial curl radii r1 and r2, the arithmetic unit 12b obtains the initial curl radius r₀ in the outflow direction θd according to the cutting condition by interpolation or extrapolation.

As described above, the tensile strain ε is derived by Expression (1). On the other hand, the chip fracture strain ε_{c} can be obtained by a cutting test performed by changing conditions little by little. The storage unit 14 stores a value of the fracture strain ε_{c} obtained for each workpiece by the cutting test. That is, the storage unit 14 stores the value of the fracture strain ε_{c} ,in association with the workpiece, obtained by the cutting test performed by changing the cutting conditions (the cutting amount d and the feed rate f).

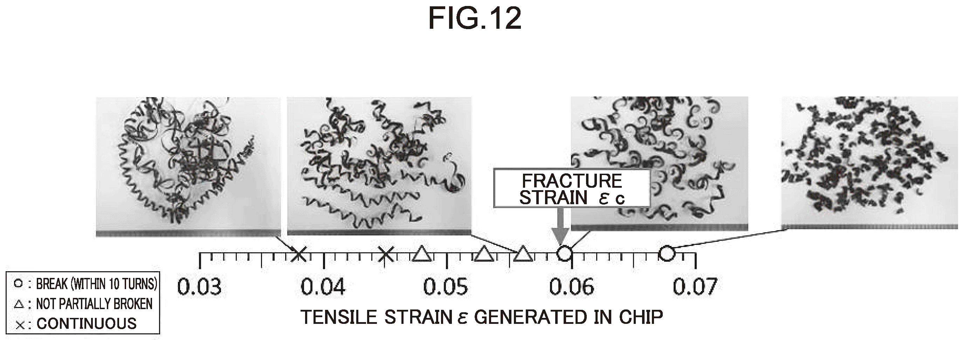

FIG. 12 illustrates an example when it is determined whether the chip 30 is broken. This example is an example of a result when S45C is used as a workpiece. When the chip 30 is not broken, it is determined as "×", and when the chip 30 which is partially broken but connected by 10 or more turns is generated, it is determined as "Δ", and when the chip is broken within 10 turns, it is determined as "∘".

Regarding the tensile strain ε of the chip 30 calculated in each cutting test, a value when the tensile strain ε is the smallest among the values when it is determined that the chip 30 is broken (when it is determined as "∘") has been defined as a chip fracture strain ε_{c}. The value of the chip fracture strain ε_{c} for each workpiece is stored in the storage unit 14 in association with the name of the workpiece.

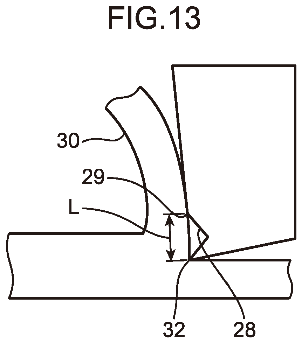

As described above, the tensile strain ε is calculated according to Expression (1) and compared with the fracture strain ε_{c}, thereby predicting the breakability. However, as illustrated in FIG. 13, when the chip thickness h is larger than the distance L from the blade tip 32 to the breaker vertex 29, that is, $h > L Expression$

When the above condition is satisfied, the arithmetic unit 12b outputs information indicating that it is predicted that the chip 30 is not broken. That is, in the breakability prediction based on the comparison between the tensile strain ε and the fracture strain ε_{c}, it is determined that the smaller the distance L from the blade tip 32 to the vertex 29 of the breaker, the more likely the breakability. However, when the breaker is actually too small, as illustrated in FIG. 13, the chip 30 passes through the breaker without being bent by the breaker, and the chip 30 is not broken. In order to improve the breakability prediction when such a phenomenon occurs, the breakability prediction when Expression (9) holds is also added.

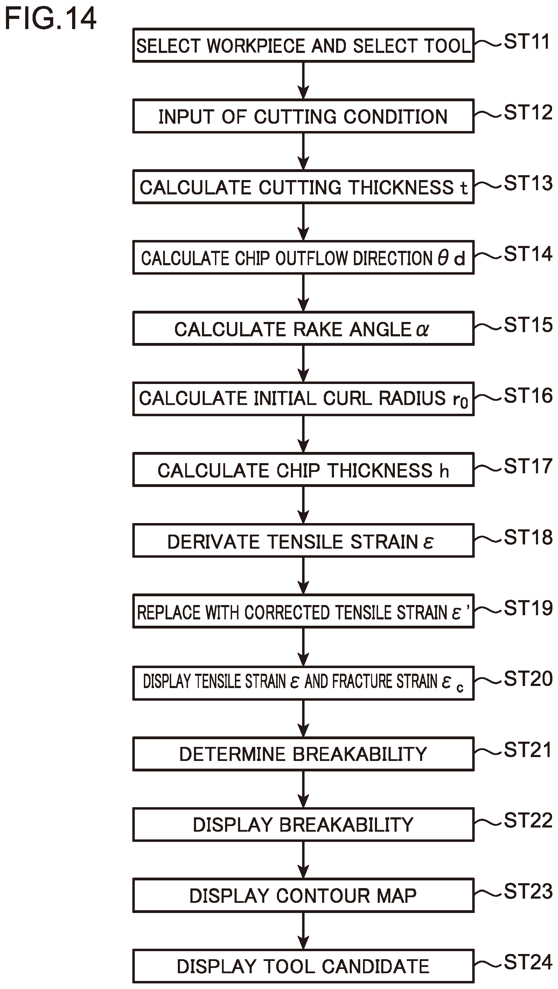

Next, a method of predicting the breakability of the chip 30 using the chip breakability prediction device 10 according to the first embodiment will be described with reference to FIG. 14.

In order to perform cutting on the workpiece, it is necessary to set cutting conditions. The chip breakability prediction device 10 is used to set cutting conditions. Using the chip breakability prediction device 10, the user inputs necessary information to the input/output unit 16, outputs a chip breakability prediction result, and determines a cutting condition according to the prediction result.

First, in the input/output unit 16, the user selects a target workpiece in the workpiece field 21a of the input region 21, and selects a holder and a chip to be used in the holder shape field 21b and the chip shape field 21c (step ST11). As a result, information on the selected workpiece and tool is extracted from the information on the workpiece and tool stored in the storage unit 14 and input to the reception unit 12a. At this time, when the user inputs the values of the lateral cutting blade angle, the cutting blade inclination angle, the nose radius R, and the tip angle, these pieces of information are also input to the reception unit 12a.

The user also inputs the cutting speed, the feed rate f, and the cutting amount d in the cutting condition field 21d (step ST12). These pieces of information are also input to the reception unit 12a. Note that the value of the cutting condition is a provisional value, and when it is predicted that the chip 30 is not broken, the cutting conditions are changed again. The holder and the chip may also be changed according to the prediction result.

When information necessary for cutting is input to the reception unit 12a, the arithmetic unit 12b uses the information received by the reception unit 12a to derive information for predicting whether the chip 30 is broken. Specifically, the arithmetic unit 12b first calculates the cutting thickness t using any one of Expressions (5), (7), and (8) according to the magnitude relationship between the cutting amount d and the nose radius R (step ST13).

In addition, the arithmetic unit 12b obtains the chip outflow direction θd using the cutting amount d, the feed rate f, and the nose radius R of the chip (step ST14). The chip outflow direction θd is calculated using, for example, an approximate expression of Colwell stored in the storage unit 14. Using the calculated chip outflow direction θd, the rake angles α1 and α2 stored in the storage unit 14, and the initial curl radii r1 and r2 of the chip, the arithmetic unit 12b calculates the rake angle α and the initial curl radius r₀ of the chip in the direction θd (steps ST15 and ST16).

Subsequently, the arithmetic unit 12b calculates the chip thickness h by substituting the cutting thickness t obtained in step ST13, the rake angle α obtained in step ST15, and the shear angle Φ stored in the storage unit 14 into Expression (4) (step ST17). In addition, the arithmetic unit 12b derives the tensile strain ε by substituting the initial curling radius r₀ obtained in step ST16 and the chip thickness h obtained in step ST17 into Expression (1) (step ST18).

At this time, in a case where it is determined that the chamfer width or the blade tip rounding radius b of the selected chip is relatively large with respect to the cutting thickness t, the corrected tensile strain ε' calculated by Expression (2) is alternatively used as the tensile strain ε of Expression (1) (step ST19).

The derived value of the tensile strain ε (or the corrected tensile strain ε') is displayed in the field 22c of the breakability prediction value in the result output region 22 of the input/output unit 16. In addition, the value of the fracture strain ε_{c} is displayed in a fracture boundary field 22d in the result output region 22 of the input/output unit 16 (step ST20).

Then, the arithmetic unit 12b compares the tensile strain ε (or the corrected tensile strain ε') derived in step ST18 with the fracture strain ε_{c} stored in the storage unit 14 to determine the breakability of the chip 30 (step ST21).

The communication unit 12c communicates with the input/output unit 16. As a result, based on the comparison result between the derived tensile strain ε (or the corrected tensile strain ε') and the fracture strain ε_{c}, a mark indicating breakability such as ∘Δ× is displayed in the breakability field 22b in the result output region 22 of the input/output unit 16 (step ST22). For example, when the value of the tensile strain ε (or the corrected tensile strain ε') is larger than the fracture strain εc by a predetermined value or more, "∘" is displayed. That is, in this case, the result that the chip is predicted to be broken is displayed.

In addition, the arithmetic unit 12b similarly derives the tensile strain ε (or the corrected tensile strain ε') not only for the selected cutting amount d and feed rate f but also for the cutting amount d and feed rate f within a predetermined range including these values. That is, the arithmetic unit 12b derives information for predicting whether a cutting chip can be broken for each case when the condition of cutting is changed in the ranges of the feed rate and the cutting amount displayed in the contour map. In addition, the arithmetic unit 12b extracts the fracture strain ε_{c} in the case of the cutting amount d and the feed rate f in these ranges.

Then, the communication unit 12c outputs information for creating a contour map regarding the tensile strain ε (or the corrected tensile strain ε') in the case of the cutting amount d and the feed rate f in the predetermined range. Furthermore, the communication unit 12c communicates with the input/output unit 16 so as to output information for causing the contour map image to be displayed on the display screen 20 of the display unit 16a in the input/output unit 16 (step ST23). Then, a contour map is displayed on the display screen 20 of the display unit 16a. In the image of the contour map, the fracture strain ε_{c} at each of the cutting amount d and the feed rate f is also displayed. That is, the communication unit 12c communicates with the input/output unit 16 based on the information derived by the arithmetic unit 12b. As a result, on the display unit 16a of the input/output unit 16, the distribution of the tensile strain ε generated in the chip is displayed by contour lines and an image representing the fracture boundary 22f of the chip is displayed in the coordinate system in which the conditions of the cutting are coordinate axes.

In addition, the arithmetic unit 12b compares the tensile strain ε (or the corrected tensile strain ε') with the fracture strain ε_{c} for all the tools included in the tool information 14b stored in the storage unit 14 for the selected workpiece. As a result, whether the chip 30 is broken is calculated for each tool. As a result, all the registered tools are displayed in a list in the tool candidate field 22e in the order in which it is determined that the chip is easily broken (step ST24).

When it is determined that the chip 30 is broken under the input cutting conditions, the user may cut the workpiece under the input cutting conditions. On the other hand, when it is determined that the chip 30 is not broken under the input cutting conditions, the cutting conditions may be changed to cutting conditions predicted to be broken with reference to the displayed contour maps. Alternatively, the chip breakability may be predicted again using the chip breakability prediction device 10 after changing the cutting condition. Alternatively, the cutting of the workpiece may be performed in place of the tool displayed as the tool candidate.

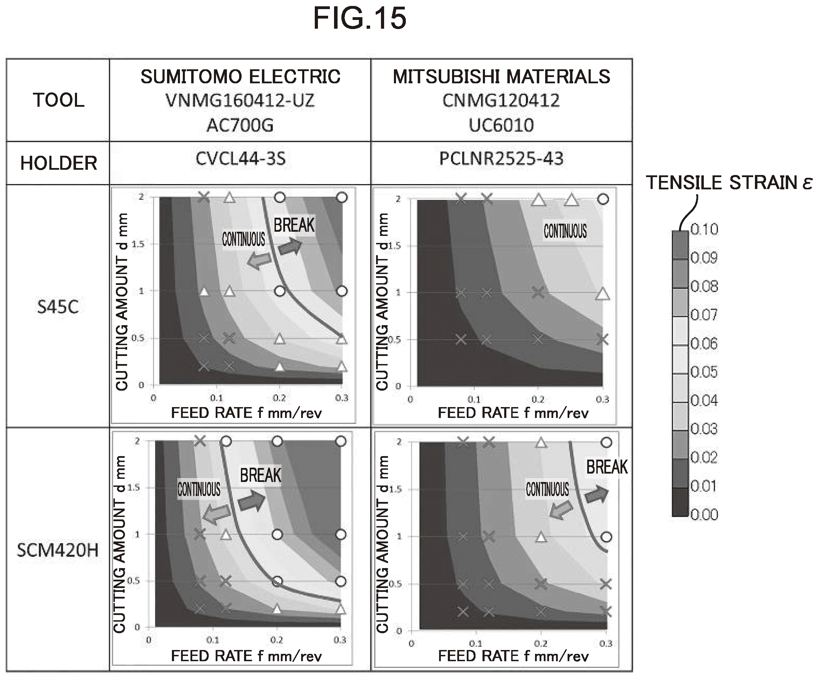

Next, an example of a breakability prediction result obtained in a cutting test performed while changing the cutting amount d and the feed rate f will be described. FIG. 15 is a contour map obtained by the chip breakability prediction device 10, on which symbols (∘Δ×) indicating the broken state of the chip illustrated in FIG. 12 are placed. Thus, the prediction result roughly agrees with the experimental result. As the cutting amount decreases from about 1.2 mm, the portion determined to be broken is smoothly bent. This is because the chip outflow angle rapidly changes with the cutting amount d equal to or less than the nose radius R (1.2 mm) of the tool. However, since the method of using the breaker shape (initial curl radius r₀) and the rake angle α in the chip outflow direction θd is adopted, it can be seen that the chip breakability can be predicted.

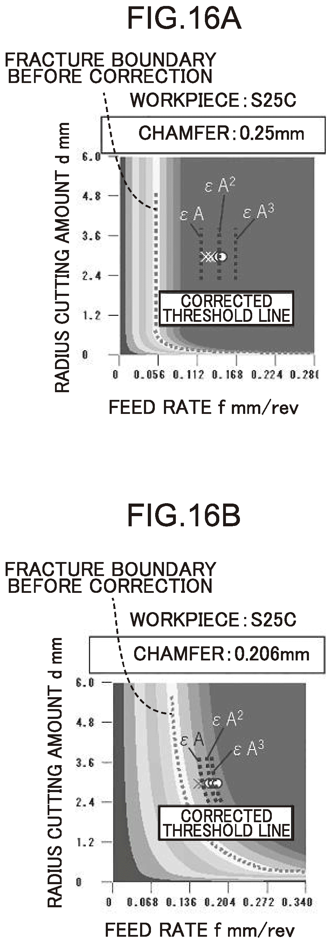

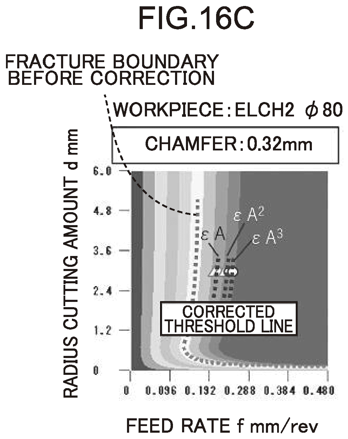

FIGS. 16A to 16C show prediction results when the tensile strain ε is replaced with the corrected tensile strain ε'. When the chamfer width b is relatively large, the prediction result as to whether a chip is broken deviates. However, it is found that the prediction accuracy is improved by replacing the tensile strain ε with the corrected tensile strain ε'. In addition, it can be seen that the prediction accuracy is improved in the case of the correction value using A² as compared with the case of the correction value using A or A³.

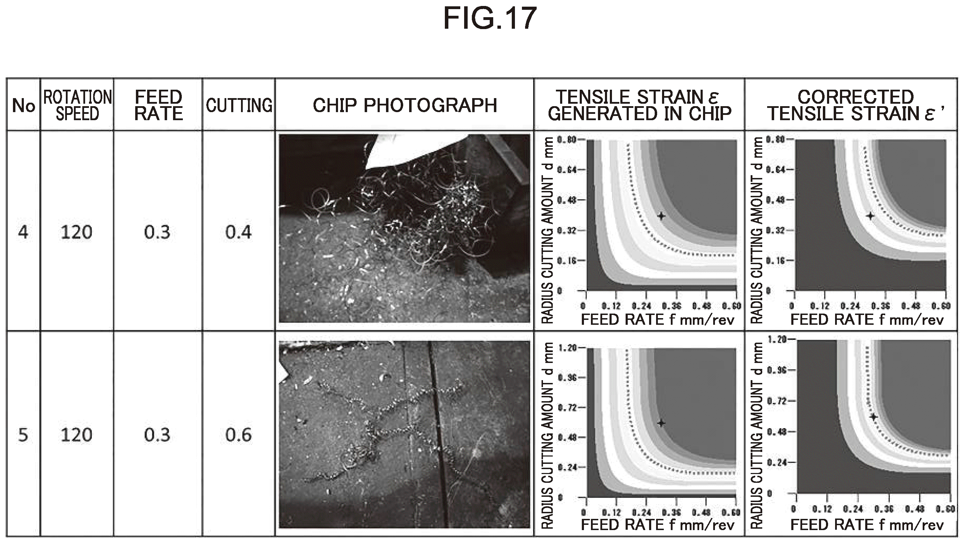

In addition, FIG. 17 also illustrates a prediction result in a case where the tensile strain ε is substituted by the corrected tensile strain ε'. FIG. 17 shows an actual chip photograph, a contour map based on the tensile strain ε, and a contour map based on the corrected tensile strain ε'. For example, in the test example No. 4 in which the chip 30 is not broken, it is predicted that the chip is broken by the breakability prediction based on the tensile strain ε, but it is predicted that the chip is not broken by the breakability prediction based on the corrected tensile strain ε'. Therefore, it can be seen that the prediction accuracy is improved by substituting the tensile strain ε with the corrected tensile strain ε'.

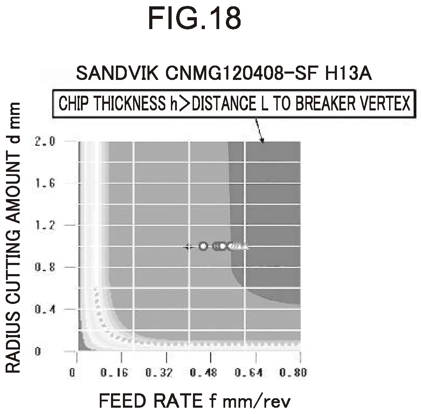

FIG. 18 illustrates an example of a result when the arithmetic unit 12b outputs information indicating that it is predicted that the chip 30 is not broken when the chip thickness h is larger than the distance L from the blade tip 32 to the vertex 29 of the breaker. The upper right portion in the drawing is a region indicating that the chip is not broken. On the other hand, as for ∘Δ× obtained in the experiment result, Δ is displayed in the region. Therefore, it can be said that it can be predicted that the chip 30 becomes too thick and are not broken.

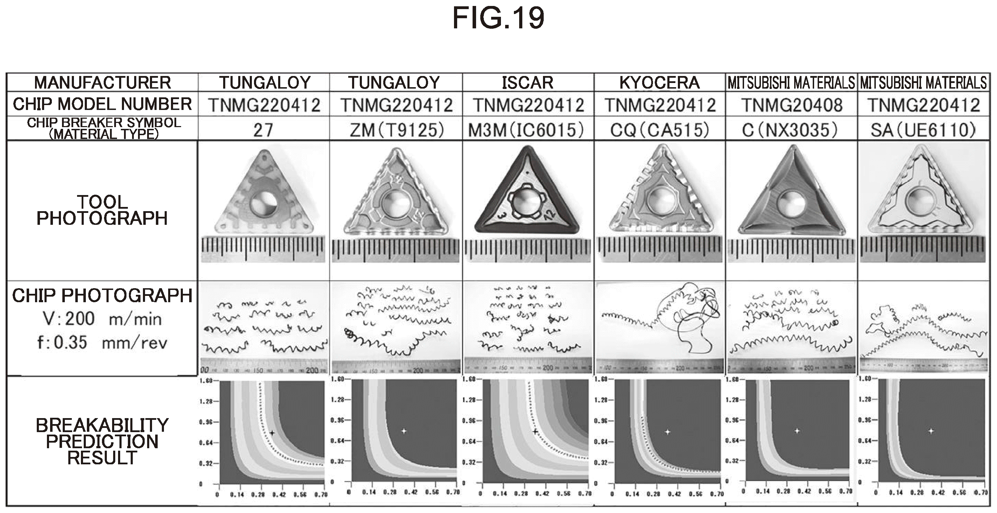

FIG. 19 is also an example of a result when the chip thickness h is larger than the distance L from the blade tip 32 to the breaker vertex 29. This example is a result in a case where the tool is changed, and a chip photograph is also shown. It can be seen that the photograph of the chip matches the prediction result.

As described above, in the chip breakability prediction device 10 according to the present embodiment, the reception unit 12a receives the information on the workpiece and the tool and the information indicating the feed rate and the cutting amount. Then, the arithmetic unit 12b derives information for predicting whether the chip 30 is broken in the case of the workpiece, the tool, the feed rate f, and the cutting amount d indicated by the information received by the reception unit 12a. The derived information is displayed on the display unit 16a. Therefore, the examiner can determine whether the chip 30 is broken from the information displayed on the display unit 16a. In addition, even in a case where it is predicted that the chip 30 is not broken, the information regarding the breakability prediction can be obtained again by changing at least one of the feed rate f and the cutting amount d. Therefore, it is possible to easily perform condition determination in the case of performing cutting.

In the present embodiment, when the chamfer width or the blade tip rounding radius b of the tool is relatively large with respect to the cutting thickness t, the tensile strain ε is replaced with the corrected tensile strain ε'. That is, the influence of the chamfer width of the tool or the size of the blade tip rounding radius b on the tensile strain ε of the chip 30 is considered. Therefore, it is possible to further improve the breakability prediction performance of the chip 30.

In the present embodiment, in the result output region 22 of the display unit 16a, a contour map, determination availability, a breakability prediction value, and a fracture boundary 22f are displayed, but the present embodiment is not limited thereto. For example, the display unit 16a may display only a contour map, may display only determination availability, or may display only a breakability prediction value and a fracture boundary 22f. In addition, the display of the tool candidates may be omitted.

In the present embodiment, the process of substituting the tensile strain ε with the corrected tensile strain ε' is performed. However, when it is known that the cutting thickness t is equal to or less than the chamfer width or the blade tip rounding radius b, this process may be omitted.

In the present embodiment, the arithmetic unit 12b calculates the initial curl radius r₀ and the rake angle α in the chip outflow direction θd due to cutting, and calculates the breakability prediction using the calculated initial curl radius r₀ and rake angle α. However, the present embodiment is not limited to this configuration. That is, although the prediction accuracy decreases, the initial curl radius r₀ and the rake angle α in the chip outflow direction θd may not be derived. In this case, for example, the initial curl radius r₀ and the rake angle α in the direction θ1 perpendicular to the lateral cutting blade may be used, or the initial curl radius r₀ and the rake angle α in the direction θ2 along the bisector of the tip angle of the chip may be used.

### (Second embodiment)

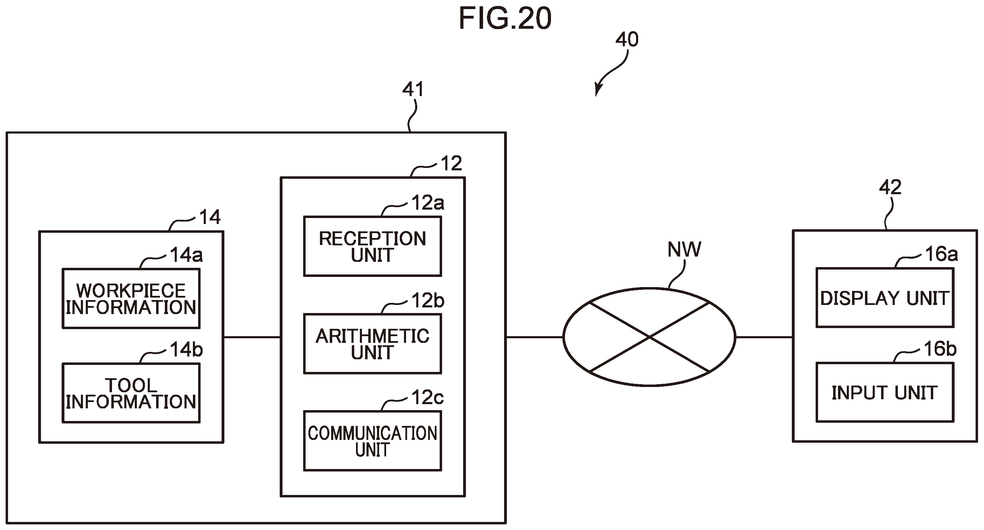

As illustrated in FIG. 20, the second embodiment is a control device 41 provided in a prediction system 40 for predicting breakability of a chip in cutting. Note that, here, the same constituent elements as those of the first embodiment are denoted by the same reference numerals, and detailed description thereof will be omitted.

The control device 41 is communicably connected to an input/output device 42 via, for example, a computer network NW. The control device 41 includes a control unit 12 for performing arithmetic processing, and a storage unit 14 for storing a processing program, data, and the like.

The input/output device 42 includes a display unit 16a having a display screen 20 and an input unit 16b such as a keyboard. The display unit 16a is configured to display cutting conditions and calculation results. The display screen 20 of the display unit 16a includes an input region 21 and a result output region 22, similarly to the display screen 20 of the first embodiment (see FIG. 2). In the input region 21, information input by an operation by the input unit 16b is displayed. The input information is temporarily stored in the storage unit 14 of the control device 41 via, for example, the computer network NW. Note that the input unit 16b may be configured integrally with the display unit 16a.

The storage unit 14 stores information on a workpiece during cutting (workpiece information 14a) and information on a tool (tool information 14b). In addition, the storage unit 14 may temporarily store information transmitted from the input/output device 42 and data and information used in calculation by the arithmetic unit 12b.

The functions executed by the control unit 12 include a reception unit 12a, an arithmetic unit 12b, and a communication unit 12c. The communication unit 12c transmits necessary control information to the input/output device 42 so that the workpiece and the tool indicated by the information stored in the storage unit 14 are displayed on the display screen 20 of the input/output device 42.

When performing calculation, the control unit 12 uses information stored in the storage unit 14 and information output from the input/output device 42 and temporarily stored in the storage unit 14 via the computer network NW.

The reception unit 12a receives, from the input/output device 42, information on factors that affect whether a chip is broken, such as cutting conditions. Specifically, the reception unit 12a receives, from the storage unit 14, information on a workpiece and a tool that match the workpiece and the tool selected in the input region 21 of the input/output device 42. Information indicating the feed rate f and the cutting amount d input in the input region 21 of the input/output device 42 is input from the input/output device 42 to the reception unit 12a. That is, the reception unit 12a receives information on a workpiece to be subjected to the cutting and a tool to be used selected by the input/output device 42 among the workpiece and the tool indicated by the information stored in the storage unit 14, and receives information indicating the feed rate f and the cutting amount d in the cutting.

The arithmetic unit 12b derives information for predicting whether a chip is broken using the information received by the reception unit 12a.

The communication unit 12c communicates with the input/output device 42 such that the information for predicting whether a chip is broken derived by the arithmetic unit 12b is displayed in the result output region 22 on the display screen 20 of the display unit 16a of the input/output device 42.

In the control device 41 according to the second embodiment, among the control steps illustrated in FIG. 14, steps ST13 to ST19 and ST21 are performed. Furthermore, in the input/output device 42, the control device 41 communicates with the input/output device 42 so that steps ST20 and ST22 to ST24 are performed.

Although other configurations, operations, and effects are not described, the description of the first embodiment can be applied to the second embodiment.

### (Other Embodiments)

It should be understood that the embodiments disclosed herein are illustrative in all respects and are not restrictive. The present invention is not limited to the above embodiments, and various changes, improvements, and the like can be made without departing from the gist of the present invention.

Here, the above embodiments will be outlined.
(1) A chip breakability prediction device according to the embodiment includes a storage unit that stores information on a workpiece and a tool in cutting, a reception unit configured to receive information on a workpiece to be subjected to cutting and a tool to be used, the workpiece being selected from the workpiece and the tool indicated in the information stored in the storage unit, and receive information indicating a feed rate and a cutting amount in the cutting, an arithmetic unit configured to derive information for predicting whether a chip is broken using the information received by the reception unit, and a display unit configured to display the information for predicting whether the chip is broken, the information being derived by the arithmetic unit.
   In the chip breakability prediction device, the reception unit receives information on a workpiece to be cut and a tool to be used, and information indicating a feed rate and a cutting amount. Then, the arithmetic unit derives information for predicting whether a chip is broken in the case of the workpiece, the tool, the feed rate, and the cutting amount indicated by the information received by the reception unit. Since the derived information is displayed on the display unit, it is possible to determine whether the chip is broken from the information displayed on the display unit. In addition, even when it is predicted that the chip is not broken, the information regarding the breakability prediction can be obtained again by changing at least one of the feed rate and the cutting amount. Therefore, it is possible to easily perform condition determination in the case of performing cutting.
(2) the arithmetic unit may be configured to calculate a tensile strain generated in a chip by the cutting based on an initial curl radius and a chip thickness of the chip, and correct the tensile strain using a chamfer width or a blade tip rounding radius of the tool indicated by the information received by the reception unit, and a cutting thickness obtained from a nose radius of the tool, a lateral cutting blade angle of the tool, the feed rate, and the cutting amount indicated by the information received by the reception unit.

In this aspect, since the influence of the chamfer width or the blade tip rounding radius of the tool and the cutting thickness on the tensile strain of the chip is taken into consideration, the chip breakability prediction performance can be further improved.

That is, when there is a relatively large chamfer or blade tip rounding compared to the cutting thickness determined by the cutting conditions, the chip shape is determined by the chamfer or the blade tip rounding regardless of the chip breaker provided behind the chamfer or the blade tip rounding. For this reason, unlike the initial assumption (that the chip initial curl radius is geometrically determined by the chip breaker), the prediction accuracy of whether the chip is broken may be deteriorated. On the other hand, in the present aspect, since the tensile strain is corrected, it is possible to avoid occurrence of a situation in which the prediction accuracy is deteriorated.

(3) the arithmetic unit may be configured to obtain an initial curl radius and a rake angle in each cross section from a cross section of the tool indicated by the information received by the reception unit in a direction perpendicular to the lateral cutting blade and a cross section of a bisector of a tip angle of the tool, and calculate an initial curl radius and a rake angle in a chip outflow direction by the cutting by interpolation or extrapolation from the acquired initial curl radius and rake angle in each cross section.

In this aspect, since the initial curl radius and the rake angle in consideration of the outflow direction of the chip are used, it is possible to further improve the chip breakability prediction performance.

That is, even when the same tool is used, the chip outflow direction changes depending on the cutting conditions or the workpiece. For this reason, since the cross section of the tool in the chip outflow direction changes, the cross-sectional shape of the chip breaker that affects the breakability of the chip changes. Therefore, in practice, it is necessary to grasp the tool shape three-dimensionally, but in that case, storage of 3D data and data processing for each cutting condition are required, and a complicated procedure is required. On the other hand, in the present aspect, the initial curl radius and the rake angle in the chip outflow direction by the cutting are calculated by interpolation or extrapolation from the acquired initial curl radius and rake angle in each cross section. Therefore, a complicated procedure can be unnecessary. In addition, the analysis time per condition does not become long as in the method using FEM analysis.

(4) The display unit may be configured to display an image representing a distribution of tensile strain generated in the chip by contour lines and representing a fracture boundary of the chip as the information for predicting breakability of the chip in a coordinate system in which a condition of the cutting is a coordinate axis.

In this aspect, when the information derived by the arithmetic unit predicts that the chip is not broken, the condition of the cutting for breaking the chip can be easily estimated with reference to the image displayed on the display unit.

(5) The display unit may be configured to display a distribution of tensile strain generated in the chip by one or more methods selected from color, shade of hue, and luminance.

In this aspect, the distribution of the tensile strain can be easily identified in the image displayed on the display unit.

(6) the arithmetic unit may be configured to compare a distance from a blade tip of the tool to a breaker vertex with a chip thickness and predict that the chip is not broken when the chip thickness is larger.

When the chip thickness is larger than the breaker shape, the rigidity of the chip is too high, and the chip does not enter the valley of the breaker. For this reason, there is a possibility that the chip does not have an assumed shape along the breaker, and the prediction accuracy of the breakability is lowered. On the other hand, in the present aspect, the distance from the blade tip of the cutting tool to the breaker vertex is compared with the chip thickness at the time of cutting to predict the breakability. Therefore, it is possible to prevent the prediction accuracy from deteriorating.

(7) the arithmetic unit may be configured to calculate the breakability of a chip for all tools indicated by the information stored in the storage unit. In addition, the display unit may be configured to display a list of breakability of a chip for each tool based on the information derived by the arithmetic unit.

In this aspect, the display unit displays a list of the breakability of the chip for each tool. Therefore, even if the information derived by the arithmetic unit predicts that the chip is not broken, it is possible to determine a tool expected to be improved based on the list of the breakability of a chip for each tool displayed on the display unit. Therefore, it is expected to improve the breakability of a chip.

(8) A control device according to the embodiment is a control device provided in a prediction system for predicting breakability of a chip in cutting and to be communicably connected to an input/output device, the control device including a storage unit that stores information on a workpiece and a tool in cutting, a reception unit configured to receive, from the input/output device, information on a workpiece to be subjected to cutting and a tool to be used, which are selected by the input/output device from among the workpiece and the tool indicated in the information stored in the storage unit, and receive, from the input/output device, information indicating a feed rate and a cutting amount in the cutting, an arithmetic unit configured to derive information for predicting whether a chip is broken using the information received by the reception unit, and a communication unit configured to communicate with the input/output device such that the information for predicting whether the chip is broken derived by the arithmetic unit is displayed on a display unit of the input/output device.

In the control device, a reception unit receives information on a workpiece to be subjected to cutting and a tool to be used, and information indicating a feed rate and a cutting amount. Then, the arithmetic unit derives information for predicting whether a chip is broken in the case of the workpiece, the tool, the feed rate, and the cutting amount indicated by the information received by the reception unit. The derived information is output from the communication unit, and the information is input to the input/output device. It is possible to determine whether the chip is broken based on the information displayed on the display unit of the input/output device. In addition, even when it is predicted that the chip is not broken, the information regarding the breakability prediction can be obtained again by changing at least one of the feed rate and the cutting amount. Therefore, it is possible to easily perform condition determination in the case of performing cutting.

(9) the arithmetic unit may be configured to calculate a tensile strain generated in a chip by the cutting based on an initial curl radius and a chip thickness of the chip, and correct the tensile strain using a chamfer width or a blade tip rounding radius of the tool indicated by the information received by the reception unit, and a cutting thickness obtained from a nose radius of the tool, a lateral cutting blade angle of the tool, the feed rate, and the cutting amount indicated by the information received by the reception unit.

(10) the arithmetic unit may be configured to obtain an initial curl radius and a rake angle in each cross section from a cross section of the tool indicated by the information received by the reception unit in a direction perpendicular to the lateral cutting blade and a cross section of a bisector of a tip angle of the tool, and calculate an initial curl radius and a rake angle in a chip outflow direction by the cutting by interpolation or extrapolation from the acquired initial curl radius and rake angle in each cross section.

(11) The communication unit may be configured to communicate with the input/output device such that an image representing a distribution of tensile strain generated in a chip by contour lines and representing a fracture boundary of the chip is displayed on the display unit in a coordinate system in which a condition of the cutting is set as coordinate axes.

(12) The communication unit may be configured to communicate with the input/output device such that a distribution of tensile strain generated in the chip is displayed on the display unit by one or more methods selected from color, shade of hue, and luminance.

(13) The arithmetic unit may be configured to compare a distance from a blade tip of the tool to a breaker vertex with a chip thickness and predict that the chip is not broken when the chip thickness is larger.

When the chip thickness is larger than the breaker shape, the rigidity of the chip is too high, and the chip does not enter the valley of the breaker. For this reason, there is a possibility that the chip does not have an assumed shape along the breaker, and the prediction accuracy of the breakability is lowered. On the other hand, in the present aspect, since the breakability is predicted by comparing the distance from the blade tip of the cutting tool to the breaker vertex and the chip thickness at the time of cutting, it is possible to prevent the prediction accuracy from deteriorating.

(14) The arithmetic unit may be configured to calculate breakability of a chip for all tools indicated by the information stored in the storage unit. In addition, the communication unit may communicate with the input/output device such that a list of breakability of a chip for each tool is displayed on the display unit based on a calculation result by the arithmetic unit.

(15) A chip breakability prediction method according to the embodiment includes receiving, by a reception unit, information on a workpiece to be subjected to cutting and a tool to be used, the workpiece and the tool being selected from the workpiece and the tool in the cutting indicated in information stored in a storage unit, and receiving, by the reception unit, information indicating a feed rate and a cutting amount in the cutting, deriving, by an arithmetic unit, information for predicting whether a chip is broken, using the information received by the reception unit, and displaying the information derived by the arithmetic unit on a display unit.

In the chip breakability prediction method, the reception unit receives information on the workpiece and the tool and information indicating the feed rate and the cutting amount, and the arithmetic unit uses the information received by the reception unit to derive information for predicting whether the chip is broken. The derived information is displayed on the display unit. Therefore, it is possible to determine whether the chip is broken from the information displayed on the display unit. In addition, even when it is predicted that the chip is not broken, the information regarding the breakability prediction can be obtained again by changing at least one of the feed rate and the cutting amount. Therefore, it is possible to easily perform condition determination in the case of performing cutting.

(16) In the chip breakability prediction method, the arithmetic unit may calculate a tensile strain generated in the chip by the cutting based on the initial curl radius and a chip thickness of the chip. In this case, the arithmetic unit may correct the tensile strain using a chamfer width or a blade tip rounding radius of the tool indicated by the information received by the reception unit, and a cutting thickness obtained from a nose radius of the tool, a lateral cutting blade angle of the tool, the feed rate, and the cutting amount indicated by the information received by the reception unit.

(17) In the chip breakability prediction method, the arithmetic unit may obtain an initial curl radius and a rake angle in each cross section from a cross section of the tool indicated by the information received by the reception unit in a direction perpendicular to the lateral cutting blade and a cross section of a bisector of a tip angle of the tool, and calculate an initial curl radius and a rake angle in a chip outflow direction by the cutting by interpolation or extrapolation from the acquired initial curl radius and rake angle in each cross section.

(18) In the method for predicting chip breakability, the arithmetic unit may compare a distance from a blade tip of a cutting tool to a breaker vertex with a chip thickness, and predict that a chip is not broken when the chip thickness is larger.

When the chip thickness is larger than the breaker shape, the rigidity of the chip is too high, and the chip does not enter the valley of the breaker. For this reason, there is a possibility that the chip does not have an assumed shape along the breaker, and the prediction accuracy of the breakability is lowered. On the other hand, in the present aspect, since the breakability is predicted by comparing the distance from the blade tip of the cutting tool to the breaker vertex and the chip thickness at the time of cutting, it is possible to prevent the prediction accuracy from deteriorating.

(19) A chip breakability prediction method according to the embodiment includes receiving, from an input/output device, information on a workpiece to be subjected to cutting and a tool to be used, the workpiece and the tool being selected from the workpiece and the tool in the cutting indicated in the information stored in a storage unit, and receiving, from the input/output device, information indicating a feed rate and a cutting amount in the cutting, deriving, by an arithmetic unit, information for predicting whether a chip is broken in a case of a workpiece, a tool, a feed rate, and a cutting amount indicated by the information received from the input/output device, and communicating, by a communication unit, with the input/output device such that the information derived by the arithmetic unit is displayed on a display unit of the input/output device.

In the chip breakability prediction method, information indicating a workpiece, a tool, a feed rate, and a cutting amount is received, and information for predicting whether a chip is broken in the case of the workpiece, the tool, the feed rate, and the cutting amount indicated by the information is derived. The derived information is displayed on the display unit by communication with the display unit of the input/output device. Based on the displayed information, it is possible to determine whether the chip is broken. In addition, even in a case where it is predicted that the chip is not broken, the information regarding the breakability prediction can be obtained again by changing at least one of the feed rate and the cutting amount. Therefore, it is possible to easily perform condition determination in the case of performing cutting.

As described above, according to the above embodiment, it is possible to easily set conditions for cutting when performing cutting.

This application is based on Japanese Patent Application No. 2023-198389 filed on November 22, 2023, the contents of which are incorporated herein by reference.

## Claims

1. A chip breakability prediction device comprising:
a storage unit that stores information on a workpiece and a tool in cutting;
a reception unit configured to receive information on a workpiece to be subjected to cutting and a tool to be used, the workpiece being selected from the workpiece and the tool indicated in the information stored in the storage unit, and receive information indicating a feed rate and a cutting amount in the cutting;
an arithmetic unit configured to derive information for predicting whether a chip is broken using the information received by the reception unit; and
a display unit configured to display the information for predicting whether the chip is broken, the information being derived by the arithmetic unit.

2. The chip breakability prediction device according to claim 1, wherein
the arithmetic unit is configured to:
calculate a tensile strain generated in a chip by the cutting based on an initial curl radius and a chip thickness of the chip; and
correct the tensile strain using a chamfer width or a blade tip rounding radius of the tool indicated by the information received by the reception unit, and a cutting thickness obtained from a nose radius of the tool, a lateral cutting blade angle of the tool, the feed rate, and the cutting amount indicated by the information received by the reception unit.

3. The chip breakability prediction device according to claim 1, wherein
the arithmetic unit is configured to:
obtain an initial curl radius and a rake angle in each cross section from a cross section of the tool indicated by the information received by the reception unit in a direction perpendicular to the lateral cutting blade and a cross section of a bisector of a tip angle of the tool; and
calculate an initial curl radius and a rake angle in a chip outflow direction by the cutting by interpolation or extrapolation from the acquired initial curl radius and rake angle in each cross section.

4. The chip breakability prediction device according to claim 1, wherein the display unit is configured to display an image representing a distribution of tensile strain generated in the chip by contour lines and representing a fracture boundary of the chip as the information for predicting breakability of the chip in a coordinate system in which a condition of the cutting is a coordinate axis.

5. The chip breakability prediction device according to claim 4, wherein the display unit is configured to display a distribution of tensile strain generated in the chip by one or more methods selected from color, shade of hue, and luminance.

6. The chip breakability prediction device according to claim 1, wherein the arithmetic unit is configured to compare a distance from a blade tip of the tool to a breaker vertex with a chip thickness and predict that the chip is not broken when the chip thickness is larger.

7. The chip breakability prediction device according to claim 1, wherein
the arithmetic unit is configured to calculate breakability of a chip for all tools indicated by information stored in the storage unit, and
the display unit is configured to display a list of breakability of a chip for each tool based on the information derived by the arithmetic unit.

8. A control device provided in a prediction system for predicting breakability of a chip in cutting and to be communicably connected to an input/output device, the control device comprising:
a storage unit that stores information on a workpiece and a tool in cutting;
a reception unit configured to receive, from the input/output device, information on a workpiece to be subjected to cutting and a tool to be used, which are selected by the input/output device from among the workpiece and the tool indicated in the information stored in the storage unit, and receive, from the input/output device, information indicating a feed rate and a cutting amount in the cutting;
an arithmetic unit configured to derive information for predicting whether a chip is broken using the information received by the reception unit; and
a communication unit configured to communicate with the input/output device such that the information for predicting whether the chip is broken derived by the arithmetic unit is displayed on a display unit of the input/output device.

9. The control device according to claim 8, wherein
the arithmetic unit is configured to:
calculate a tensile strain generated in a chip by the cutting based on an initial curl radius and a chip thickness of the chip; and
correct the tensile strain using a chamfer width or a blade tip rounding radius of the tool indicated by the information received by the reception unit, and a cutting thickness obtained from a nose radius of the tool, a lateral cutting blade angle of the tool, the feed rate and the cutting amount indicated by the information received by the reception unit.

10. The control device according to claim 8, wherein the communication unit is configured to communicate with the input/output device such that an image representing a distribution of tensile strain generated in a chip by contour lines and representing a fracture boundary of the chip is displayed on the display unit in a coordinate system in which a condition of the cutting is set as coordinate axes.

11. The control device according to claim 10, wherein the communication unit is configured to communicate with the input/output device such that a distribution of tensile strain generated in the chip is displayed on the display unit by one or more methods selected from color, shade of hue, and luminance.

12. The control device according to claim 8, wherein
the arithmetic unit is configured to calculate breakability of a chip for all tools indicated by the information stored in the storage unit, and
the communication unit is configured to communicate with the input/output device such that a list of breakability of a chip for each tool is displayed on the display unit based on a calculation result by the arithmetic unit.

13. A chip breakability prediction method, comprising:
receiving, by a reception unit, information on a workpiece to be subjected to cutting and a tool to be used, the workpiece and the tool being selected from the workpiece and the tool in the cutting indicated in information stored in a storage unit, and receiving, by the reception unit, information indicating a feed rate and a cutting amount in the cutting;
deriving, by an arithmetic unit, information for predicting whether a chip is broken, using the information received by the reception unit; and
displaying the information derived by the arithmetic unit on a display unit.

14. The chip breakability prediction method according to claim 13, comprising:
calculating, by the arithmetic unit, a tensile strain generated in a chip by the cutting based on an initial curl radius and a chip thickness of the chip; and
correcting, by the arithmetic unit, the tensile strain using a chamfer width or a blade tip rounding radius of the tool indicated by the information received by the reception unit, and a cutting thickness obtained from a nose radius of the tool, a lateral cutting blade angle of the tool, the feed rate, and the cutting amount indicated by the information received by the reception unit.

15. A chip breakability prediction method, comprising:
receiving, from an input/output device, information on a workpiece to be subjected to cutting and a tool to be used, the workpiece and the tool being selected from the workpiece and the tool in the cutting indicated in the information stored in a storage unit, and receiving, from the input/output device, information indicating a feed rate and a cutting amount in the cutting;
deriving, by an arithmetic unit, information for predicting whether a chip is broken in a case of a workpiece, a tool, a feed rate, and a cutting amount indicated by the information received from the input/output device; and
communicating, by a communication unit, with the input/output device such that the information derived by the arithmetic unit is displayed on a display unit of the input/output device.
